# EUROPÄISCHE PATENTANMELDUNG

(11) **EP 0 916 483 A2**
(43) Veröffentlichungstag der Anmeldung: **19.05.1999**
(21) Anmeldenummer: 98121502.3
(22) Anmeldetag: 13.11.1998
(51) Int. Cl.: B32B 27/12, B32B 5/18

(54) **Dämmaterial**

(30) Priorität: 14.11.1997 DE 19750564
(71) Anmelder: E. Missel GmbH & Co., D-70374 Stuttgart (DE)
(72) Erfinder:
(74) Vertreter: Manitz, Finsterwald & Partner

(57) **Zusammenfassung**

Ein Dämmaterial besteht aus einer äußeren Schutzschicht (1), einer Dämmschicht (3) und einer nicht brennbaren Zwischenschicht (2) zwischen der äußeren Schutzschicht (1) und der Dämmschicht (3).

## Beschreibung

Die Erfindung betrifft ein Dämmaterial für Ummantelungen, Rohrdämmungen, Kanäle, Bögen oder Abzweigungen jeglicher Art mit einer äußeren Schutzschicht, einer nicht brennbaren Zwischenschicht und einer Dämmschicht.

Es ist bekannt, Rohre oder Kanäle zum Zwecke der Wärmedämmung sowie zur Schalldämmung mit Dämmhülsen oder Dämmschläuchen zu ummanteln, wobei die Dämmhülsen oder Dämmschläuche im Regelfall mehrlagig ausgebildet sind und flexibler Schaumstoff als wirkendes Material für Dämmeffekte verwendet ist.

Die Aufgabe der Erfindung ist es, ein Dämmaterial zu schaffen, welches bei Gewährleistung einer hohen Brandfestigkeit insbesondere gegenüber herkömmlichen Materialien gleichzeitig verbesserte Wärme- und Schalldämmeigenschaften aufweist.

Zur Lösung dieser Aufgabe wird eine nicht brennbare Zwischenschicht zwischen der äußeren Schutzschicht und der Dämmschicht vorgesehen, die gleichzeitig und in Kombination mit der Dämmschicht körperschalldämmend und wärmedämmend wirkt.

Mit dem erfindungsgemäßen Dämmaterial wird einerseits eine sehr hohe Brandfestigkeit erzielt. Andererseits bewirkt die Kombination aus außenliegender Schutzschicht, nicht brennbarer Zwischenschicht und innenliegender Wärme- und/oder Schalldämmschicht gegenüber herkömmlichen Materialien eine deutlich verbesserte Wärme- und/oder Schalldämmung. Zudem ergibt sich überraschenderweise durch Vorsehen einer nicht brennbaren Zwischenschicht zwischen der äußeren Schutzschicht und der innenliegenden Wärme- und/oder Schalldämmschicht eine hervorragende Körperschallentkoppelung. Gleichzeitig wirkt die nicht brennbare Zwischenschicht als Brandschutz für die Wärme- und/oder Schalldämmschicht, die jedoch selbst nicht modifiziert werden muß und entsprechend dick gewählt werden kann. Die nicht brennbare Zwischenschicht kann dabei ebenfalls zusätzlich wärme- und/oder schalldämmende Eigenschaften aufweisen.

Durch den erfindungsgemäß vorgesehenen Aufbau aus drei Schichten ist ein Dämmaterial geschaffen, das nicht nur brandfest ist, sondern auch besonders gute Wärme- und/oder Schalldämmeigenschaften für das zu dämmende Bauteil aufweist. Da zudem die nicht brennbare Zwischenschicht als separate Schicht zwischen der äußeren Schutzschicht und der Wärme- und/oder Schalldämmschicht vorgesehen ist, kann das erfindungsgemäße Dämmaterial einfach und kostengünstig hergestellt werden, wobei einzelne oder auch sämtliche Schichten zu einem Verbund zusammengefaßt werden können. Besonders vorteilhaft ist die Kombination thermischer und akustischer Dämmung von medienführenden Rohrleitungen. Der Vorteil der unbrennbaren Zwischenschicht liegt insbesondere darin, den brandempfindlichen Dämmstoff, der vorzugsweise aus Kunststoffschaum besteht, und damit das innenliegende Rohr bei kurzzeitiger Hitze- oder Brandeinwirkung vor Zerstörung zu schützen.

Vorteilhafte Ausführungsformen der Erfindung sind in der Beschreibung, den Zeichnungen sowie den Unteransprüchen beschrieben.

Nach einer ersten vorteilhaften Ausführungsform kann die nicht brennbare Zwischenschicht aus einem hitzebeständigen, feuerhemmenden, weichen und formbaren Material bestehen, beispielsweise aus einem Faservlies aus Keramik-, Glas-, Mineralfasern oder aus Steinwolle. Hierbei wird unter einer nicht brennbaren Schicht ein Material verstanden, das etwa einen Schmelzpunkt bei oder oberhalb von 1000°C aufweist und als nicht brennbar im Sinne von Baustoffklassifizierungen gilt (vgl. auch DIN 4102).

Nach einer weiteren Ausbildung der Erfindung kann die Dämmschicht aus einem feinzelligen, vorzugsweise physikalisch vernetzten Polyethylenschaum bestehen. Eine derartige Dämmschicht ist zwar grundsätzlich bekannt, jedoch haben sich in Verbindung mit der nicht brennbaren Zwischenschicht besonders gute Körperschall- und Wärmedämmeigenschaften ergeben.

Die äußere Schutzschicht kann aus einem reißfesten Überzug, insbesondere aus einer Gewebefolie mit Gitterstruktur bestehen. Eine derartige Schutzschicht hat sich im Zusammenhang mit Isoliermaterialien besonders bewährt und dient erfindungsgemäß dazu, das weiche Dämmaterial und die weiche Zwischenschicht gegenüber äußeren mechanischen Einwirkungen zu schützen.

Erfindungsgemäß kann ein Gittergewebe in eine Folie integriert oder auf eine Folie aufkaschiert sein. Auch ist es vorteilhaft, eine Gitterfolie, die als äußere Schutzschicht dient, unmittelbar mit der nicht brennbaren Zwischenschicht zu verbinden.

Das erfindungsgemäße Dämmaterial kann grundsätzlich flächig hergestellt werden. Besonders vorteilhaft ist jedoch die Verarbeitung zu geschlossenen oder offenen Rohrdämmungen oder ein- und mehrteiligen Formteilen, wie Bögen, Abzweigungen oder T-Stücken.

Das bevorzugt rohrförmig ausgebildete Dämmaterial kann entweder geschlossen ausgebildet sein oder einen in Axialrichtung verlaufenden Trennschlitz aufweisen, der mittels eines Verschlusses verschließbar ist.

Zur Herstellung eines Dämmaterials gemäß der Erfindung kann ein reißfestes Gittergewebe oder ein Verbund aus Gittergewebe und Schutzfolie auf die nicht brennbare Zwischenschicht eingebracht oder auf diese aufkaschiert werden, woraufhin dieser Verbund auf eine Dämmschicht aus Kunststoffschaum aufgebracht, vorzugsweise aufkaschiert wird. Bei einem alternativen Verfahren wird der Verbund aus Gittergewebe und nicht brennbarer Materialschicht um das zu dämmende Rohr oder auf die zu dämmende Fläche gelegt und mit Hilfe eines Verschlußstreifens befestigt bzw. verschlossen.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine perspektivische und teilweise geschnittene Darstellung eines rohrförmigen Dämmaterials; und
- Fig. 2: eine perspektivische Darstellung einer zweiten Ausführungsform eines rohrförmigen Dämmaterials.

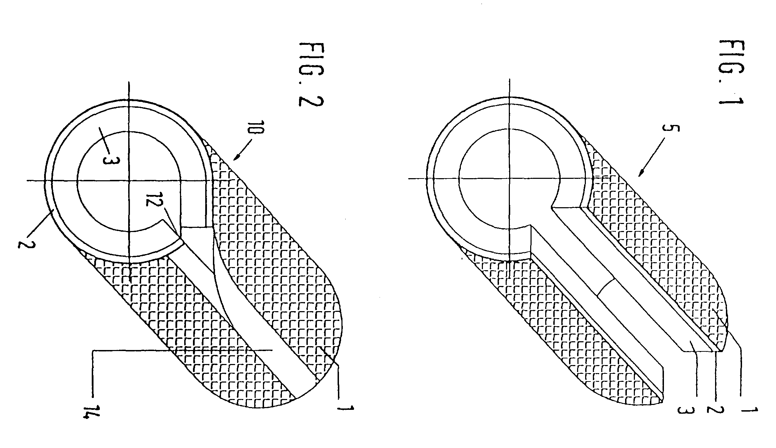

Die in Fig. 1 dargestellte Ausführungsform eines erfindungsgemäßen Dämmaterials in Form einer geschlossenen Rohrdämmung 5 weist einen schichtförmigen Aufbau auf, der aus einer äußeren Schutzschicht 1, einer innenliegenden Dämmschicht 3 sowie einer nicht brennbaren Zwischenschicht 2 besteht. Die äußere Schutzschicht 1 ist dabei als reißfester Überzug aus Gittergewebe ausgebildet, bei dem ein reißfestes Gittergewebe auf eine Folie aufkaschiert ist.

Die Dämmschicht 3 weist eine Dicke von etwa 0,5 mm - 40 mm bzw. 12 - 60 mm auf (gut geeignet ist eine Dicke von etwa 2 - 60 mm, vorzugsweise 2 - 30 mm) und besteht aus einem feinzelligen Kunststoffschaum. Die nicht brennbare Zwischenschicht 2 besteht aus mineralischen Fasern, wobei auch Keramik- oder Glasfasern u.dgl. Anwendung finden können.

Es sei darauf hingewiesen, daß die in Fig. 1 dargestellte Ausführungsform eine geschlossene Rohrform besitzt und nur zur besseren Darstellung teilweise geschnitten wiedergegeben ist.

Fig. 2 zeigt eine weitere Ausführungsform eines erfindungsgemäßen Dämmaterials 10, das die Form einer offenen Rohrdämmung besitzt, wobei grundsätzlich der gleiche Schichtaufbau wie bei der Ausführungsform von Fig. 1 gewählt ist. Der Verbund aus äußerer Schutzschicht 1, nicht brennbarer Zwischenschicht 2 und Dämmschicht 3 weist hierbei einen in Axialrichtung verlaufenden Trennschlitz 12 auf, der ein nachträgliches Aufstülpen des rohrförmigen Rohrmaterials auf eine vorhandene Rohrleitung ermöglicht. Zum Verschließen des Trennschlitzes ist bei dem dargestellten Ausführungsbeispiel ein Klebestreifen 14 oder Klettverschluß o.dgl. vorgesehen, der nach dem Anlegen des Dämmaterials an eine Rohrleitung den Trennschlitz 12 verschließt. Durch diesen integrierten Schnellverschluß ist eine besonders rasche Dämmung von Rohrleitungen möglich.
Sowohl bei Verwendung eines Klebestreifens 14 als auch bei Verwendung eines Klettverschlusses kann das Dämmaterial am Trennschlitz überlappend oder auf Stoß zusammengefügt werden, wobei im Falle einer überlappenden Verbindung der Trennschlitzverlauf kontinuierlich oder diskontinuierlich ausgeführt sein kann.

### Bezugszeichenliste

- 1: äußere Schutzschicht
- 2: nicht brennbare Zwischenschicht
- 3: Dämmschicht
- 5: geschlossene Rohrdämmung
- 10: offene Rohrdämmung
- 12: Trennschlitz
- 14: Klebe- oder Klettverschluß

## Patentansprüche

1. Dämmaterial, bestehend aus einer äußeren Schutzschicht (1) und einer Dämmschicht (3), dadurch gekennzeichnet, daß eine nichtbrennbare Zwischenschicht (2) zwischen der äußeren Schutzschicht (1) und der Dämmschicht (3) vorgesehen ist, die gleichzeitig und in Kombination mit der Dämmschicht (3) körperschalldämmend und wärmedämmend wirkt.

2. Dämmaterial nach Anspruch 1, dadurch gekennzeichnet, daß die nichtbrennbare Zwischenschicht (2) aus einem feuerhemmenden Material besteht, insbesondere aus einem Faservlies aus Keramik-, Glas-, Mineralfasern oder Steinwolle.

3. Dämmaterial nach einem der vorhergehenden Ansprüche, dadurch gekennzeichnet, daß die Dämmschicht (3) aus einem Kunststoffschaum, insbesondere einem Polypropylen- oder Polyethylenschaum besteht.

4. Dämmaterial nach einem der vorhergehenden Ansprüche, dadurch gekennzeichnet, daß die äußere Schutzschicht (1) aus einem reißfesten Überzug, insbesondere aus einer Gewebefolie mit Gitterstruktur oder eingelegtem reißfesten Gitter aus einem Kunststoff besteht.

5. Dämmaterial nach Anspruch 4, dadurch gekennzeichnet, daß das Gittergewebe in die Folie integriert oder auf die Folie aufkaschiert ist.

6. Dämmaterial nach einem der vorhergehenden Ansprüche, dadurch gekennzeichnet, daß die Dicke der nichtbrennbaren Zwischenschicht (2) etwa 0,5 bis 20 mm und vorzugsweise 30 mm beträgt und die Dicke der Dämmschicht aus Kunststoffschaum 0,5 - 40 mm beträgt.

7. Dämmaterial nach einem der vorhergehenden Ansprüche, dadurch gekennzeichnet, daß der Verbund aus äußerer Schutzschicht (1), nichtbrennbarer Zwischenschicht (2) und Dämmschicht (3) zu Dämmplatten, geschlossenen Rohrdämmungen (5), offenen Rohrdämmungen (10) oder Formteilen, insbesondere zu Bögen, Abzweigungen, T-Stücken und dergleichen verarbeitet ist.

8. Dämmaterial nach einem der vorhergehenden Ansprüche, dadurch gekennzeichnet, daß dieses vorzugsweise rohrförmig ist und vorzugsweise einen in Axialrichtung verlaufenden Trennschlitz (12) aufweist, der mittels eines Klemm, Klett- oder Klebeverschlusses (14), mittels Haken und Ösen oder mittels Druckknöpfen verschließbar ist, wobei das Dämmaterial am Trennschlitz überlappend oder auf Stoß zusammenfügbar ist.

9. Verfahren zur Herstellung eines Dämmaterials nach zumindest einem der vorstehenden Ansprüche, gekennzeichnet durch folgende Schritte:
- Einbringen oder Aufkaschieren eines reißfesten Gittergewebes in oder auf eine nichtbrennbare Materialschicht,
- Aufbringen dieses Verbundes auf eine Dämmschicht, vorzugsweise einen Polyethylendämmkörper

10. Verfahren zur Herstellung eines Dämmaterials nach Anspruch 9, dadurch gekennzeichnet, daß der Verbund auf den zu dämmenden Körper aufkaschiert wird.

11. Verfahren zur Herstellung eines Dämmaterials nach Anspruch 9, dadurch gekennzeichnet, daß der Verbund in einem Teil oder in mehreren Teilen, die untereinander auch verbunden sein können, um den Dämmkörper gelegt und mit Hilfe eines Verschlußstreifens geschlossen wird.

12. Verfahren zur Herstellung eines Dämmaterials nach Anspruch 11, dadurch gekennzeichnet, daß der Verbund zusätzlich mit dem Dämmkörper verklebt oder verschweißt wird.
